# EUROPEAN PATENT APPLICATION

(11) **EP 3 338 989 A1**
(43) Date of publication of application: **27.06.2018**
(21) Application number: 16461580.9
(22) Date of filing: 23.12.2016
(51) Int. Cl.: B29C 45/26, B29C 45/33, B29C 45/44

(54) **A CORE PIN ASSEMBLY FOR MANUFACTURING PIVOT SHAFT HOUSING FOR A VEHICLE WIPER DEVICE, A METHOD FOR MANUFACTURING PIVOT SHAFT HOUSING AND A PIVOT SHAFT HOUSING**

(71) Applicant: Valeo Autosystemy SP. Z.O.O., 32-050 Skawina (PL)
(72) Inventor: SZEWCZYK, Andrzej, 30-612 Krakow (PL); GORKA, Maciej, 34-532 Jurgow (PL); WIELGUS, Grzegorz, 31-915 Krakow (PL)
(74) Representative: Callu Danseux, Violaine

(57) **Abstract**

The present invention relates to a core pin assembly comprising two sliding elements configured for use as a component of a mold assembly for a pivot shaft housing wherein the core pin assembly comprises two sliding elements provided with a plurality of longitudinal projections forming a plurality of longitudinal recesses there between; and a shape of the longitudinal projections of one sliding element corresponds to a shape of the longitudinal recesses of the other sliding element; wherein the two separate sliding elements are configured for engaging in a reversible manner, so that the longitudinal projections of one sliding element are positioned in the longitudinal recesses of the other sliding element The present invention further relates to a method of manufacturing pivot shaft housing using the core pin assembly. The invention relates also to a pivot shaft housing comprising a hole for supporting a pivot shaft, obtained using this method.

## Description

### TECHNICAL FIELD OF THE INVENTION

The present invention relates to a core pin assembly for manufacturing a pivot shaft housing for a vehicle wiper device. The invention relates also to a method for manufacturing pivot shaft housing using the core pin assembly. Further the invention relates to a pivot shaft housing.

A pivot shaft housing for a vehicle wiper device is generally known. The wiper devices are used for wiping windscreen of a vehicle, in particular a windscreen of a car. However, it should be noted that the invention is not limited to be used with cars but also to be used with trains and other fast vehicles. The housing houses a pivot shaft for transfer a drive from a motor of a wiper device to a blade assembly. The blade assembly typically comprises rubber blade for wiping over the surface of the windscreen to be wiped.

A pivot shaft housing houses a pivot shaft in a longitudinal hole.

### STATE OF THE ART

In the state of the art there are known pivot shaft housings for housing the shaft. Since in said housings a friction force between the surface of the hole and the pivot shaft is high, a pivot shaft torque which can be obtained on the pivot shaft is undesirably reduced. Thus, reducing of the friction is desirable since the reduction causes increasing a pivot shaft torque. Increasing pivot shaft torque is especially desirable.

In known housings, in order to reduce friction between the surface of the hole and the pivot shaft bearings are usually provided at both ends of the hole.

French patent application no. 2 971 982 discloses a windscreen wiper mechanism. The shaft is rotatably mounted in a bore and retained in position by means of two upper and lower rings.

United States patent application no. 5 634 726 discloses a method of fixating a shaft in its bearing casing. The annular gap between the bearing casing and the shaft to be supported, after insertion and alignment of the shaft in the bearing casing, is filled with a plastic material.

There is a need for an improved method for manufacturing a pivot shaft housing, in which method a desired shape of the hole is obtained in simple and predictable manner.

Further, there is a need for an improved method for manufacturing a pivot shaft housing, in which shape of a hole can be obtained repetitively.

Further, there is a need for a pivot shaft housing comprising a hole for supporting pivot shaft without the need of extra bearing. Such housing should be easily and repetitively manufactured.

### DISCLOSURE OF THE INVENTION

To fulfill, at least partially, the above mentioned needs, the present invention provides a core pin assembly for use in a method for manufacturing a pivot shaft housing

The core pin assembly comprises two sliding elements configured for use as a component of a mold assembly for a pivot shaft housing. The core pin assembly comprises two sliding elements provided with a plurality of longitudinal projections forming a plurality of longitudinal recesses there between. A shape of the longitudinal projections of one sliding element corresponds to a shape of the longitudinal recesses of the other sliding element. The two separate sliding elements are configured for engaging in a reversible manner, so that the longitudinal projections of one sliding element are positioned in the longitudinal recesses of the other sliding element.

A shape of the core pin assembly according to the invention has two diameters at substantially each cross section of the core pin assembly, wherein one diameter is larger than the other one. One diameter is formed by outermost surfaces of the projections of one sliding element and second diameter is formed by outermost surfaces of the projections of the other sliding element.

It should be noted that both diameters of the core pin assembly are formed by outermost surfaces of the projections of the core pin assembly.

The core pin assembly comprises first end and second end. The first end and the second end are axially opposite to each other. One diameter increases from first end towards the second end of the core pin assembly. Meanwhile, the second diameter decreases from said first end towards said second end of the core pin assembly. It should be noted that there is a section, taken in a perpendicular direction to the longitudinal axis of the core pin assembly, in which one diameter and the second diameter are equal. Said cross section is, for example, in the middle between first end and second end of the core pin assembly.

Moreover, the shape of the sliding element provides that two sliding elements are slidable into each other in such a manner that the elements form the core pin assembly, which can be removed from the hole of the pivot shaft housing after being used for forming the hole. Since sliding elements are disassembled during withdrawal from the hole, the elements are removed from molded pivot shaft housing easily.

Thus, when using a core pin assembly according to the invention for manufacturing pivot shaft housing, the hole for a pivot shaft has two diameters at substantially each cross section. A cross section of a core pin assembly at which there is only one diameter formed, is for example a central cross section situated in the middle between two ends of the hole.

When using a pivot shaft housing according to the invention with a pivot shaft therein, the pivot shaft is supported by surfaces forming the smallest diameter at both ends of the hole. It is particularly advantageous since it eliminates a necessity of using of additional bushes at both ends of the hole to support the pivot shaft in the pivot shaft housing. In addition such pivot shaft housing have an advantage of minimizing of a coaxial shaft play between the pivot shaft housing and the pivot shaft. Minimizing of a coaxial shaft play results in a high operating stability of the pivot shaft supported by the pivot shaft housing.

Longitudinal projections of each sliding elements project from a core of the sliding element. One sliding element and the other sliding element are partly-hollowed. Partly-hollowed denotes that there is a space without the core along a length of the sliding element. Said space extends from one of the ends, for example at least half of the total length. Thus, an assembly of one sliding element and the other sliding element is feasible. Due to the space without the core, along the half of a length of the sliding element there are provided longitudinal recesses of the sliding element.

Preferably, the sliding elements have substantially the same shape. Substantially the same shape means in particular that both sliding elements have the same numbers of projections and recesses. Nevertheless, dimensions like lengths or diameters may be different for one sliding element and the other sliding element. For example, dimensions of one sliding element may be obtained by scaling of dimensions of the other sliding element.

Sliding elements of the same shape are easy to manufacture and use and provide symmetry of the hole.

Preferably, the sliding elements are identical. Identical sliding elements mean that both sliding elements have the same shape, as described above. All dimensions, like lengths or diameters, of both sliding elements are equal.

According to another aspect, the invention relates to a sliding element for use in a core pin assembly as described. The sliding element is provided with a plurality of longitudinal projections forming a plurality of longitudinal recesses there between.

Preferably, the sliding element comprises at least two recesses and at least two projections. In particular, the sliding element comprises five recesses and five projections. At least two projections cause that a hole for supporting pivot shaft can be obtained using said sliding elements.

Five recesses and five projections ensure that proper self-centering properties of the hole of the pivot shaft housing are obtained. Five recesses and five projections also cause that friction force between inner surface of the hole of the housing and the shaft is advantageously limited.

Preferably, the sliding elements comprise odd number of recesses and projections. For example, the sliding elements may comprise seven recesses and projections or nine recesses and projections, etc.

Preferably, the sliding element comprises at least one section having constant external diameter, arranged at least at an end of the sliding elements.

Such a sliding element is especially preferred since sections having substantially cylindrical shape form substantially cylindrical portions of the hole of the pivot shaft housing. The substantially cylindrical portions of the hole act as bearings for the pivot shaft. Thus, there is no need to provide any bearing or bush in the pivot shaft housing in order to support a pivot shaft and minimize coaxial shaft play between the hole and the pivot shaft.

According to a further aspect, the invention relates to a mold assembly for forming a pivot shaft housing for a vehicle wiper device comprises a mold provided with a cavity for containing a material and a core pin assembly as described above, configured to be inserted in the cavity.

According to yet another aspect, the invention also concerns a method for manufacturing a pivot shaft housing comprises the steps of:
providing of a mold assembly comprising a mold for containing a material and a core pin assembly as previously disclosed;
delivering of the material into the mold for forming the pivot shaft housing;
removing the core pin assembly from the pivot shaft housing by drawing the sliding elements out from the pivot shaft housing.

Preferably, the material is plastic or metal. In case of metal the material preferably comprises cast iron.

According to still another aspect, the invention relates to a pivot shaft housing for a vehicle wiper device comprises a through hole, while the hole comprises two axially opposite ends, wherein an inner surface of the hole comprises a plurality of spatial structures. Said spatial structures are arranged extending slant along at least part of the hole, so that each spatial structure defines a groove at one end and a rib at the other end. The spatial structures are arranged in such a manner, that at both ends of the hole each two neighboring spatial structures define the rib and the groove, respectively.

The pivot shaft housing according to the invention provides that the pivot shaft and the pivot shaft housing remain in a contact only at the ends of the through hole. Thus, a desired play is provided in a central section of the hole between the pivot shaft and the pivot shaft housing.

The pivot shaft housing may be manufactured by the method disclosed above.

Preferably, the inner surface of the hole comprises at least four spatial structures, so that at both ends of the hole said spatial structures define at least two grooves and at least two ribs.

Four spatial structures are simple to manufactured and ensure good support for a shaft.

Advantageously, the inner surface of the hole comprises ten spatial structures, so that at both ends of the hole said spatial structures define five grooves and five ribs.

Preferably, the grooves of the pivot shaft housing are configured to contain a lubricant for improving lubrication properties.

Due to improvement of lubrication properties, friction forces between cooperating pivot shaft and the pivot shaft housing are further reduced, thus increasing a maximum level of a pivot shaft torque.

Preferably, the pivot shaft housing is formed of plastic or the pivot shaft housing is formed of metal.

In a preferred embodiment, the pivot shaft housing comprises at least one portion of the hole arranged at least one end of the hole, more preferably at each end of the hole , the portion(s) comprising spatial structures extending parallel along the hole.

The spatial structures, extending parallel along the hole, act as bearings for a shaft. Thus, there is no need to provide any additional bearing or bush in the pivot shaft housing in order to support a pivot shaft and minimize coaxial shaft play between the hole and the pivot shaft.

### BRIEF DESCRIPTION OF FIGURES

The present invention is described in greater details with reference to accompanying figures, in which:

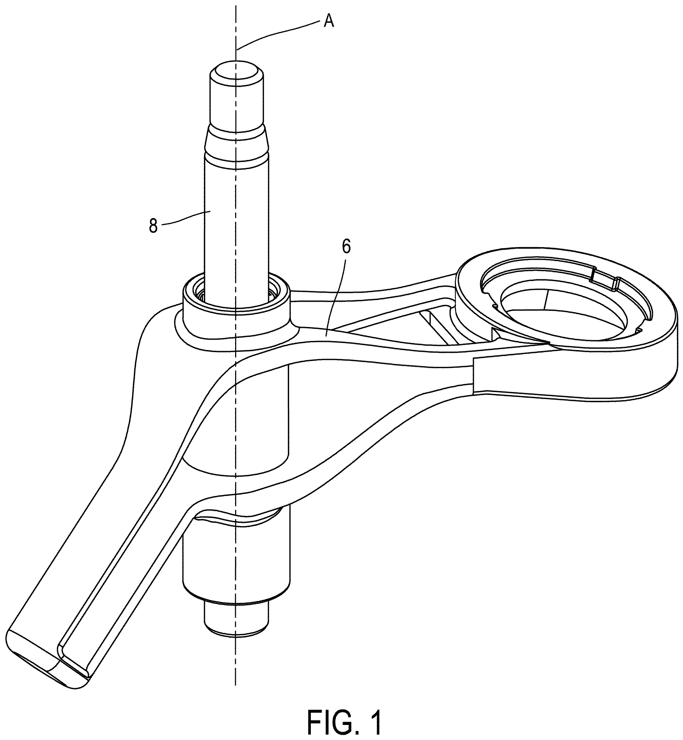

Fig. 1 is a perspective view of a pivot shaft housing for a vehicle wiper device supporting a pivot shaft therein according to the present invention.
Fig. 2 is a general view of a wiper module for a vehicle wiper device.
Fig. 3 is a front view of the pivot shaft housing supporting the pivot shaft therein according to the present invention.
Fig. 4a-c are cross-section views according to IVa-IVa, IVb-IVb, IVc-IVc of the pivot shaft housing of fig. 3, supporting the pivot shaft therein.
Fig. 5 is a schematic longitudinal cross-section partial view of the pivot shaft housing supporting a pivot shaft therein.
Fig. 6 is a perspective view of an embodiment of pivot shaft housing for a vehicle wiper device according to the present invention.
Fig. 7 is a partial view of the pivot shaft housing of figure 6 presenting a housing part of the pivot shaft housing.
Fig. 8 is a sectional perspective view of the housing part of fig. 6.
Fig. 9 is a front view of the pivot shaft housing of figure 6.
Fig. 10a-c are cross-section views according to Xa-Xa , Xb-Xb, respectively Xc-Xc of the pivot shaft housing of the same embodiment.
Fig. 11a-c are perspective views of embodiments of core pin assembly, accordingly: disassembled (fig. 11a), in a semi-assembled state (fig. 11b) and assembled (fig. 11c) according to the present invention.
Fig. 12 is a front view of the core pin assembly according to the present invention.
Fig. 13a-c are cross-section views according to XIIIa-XIIIa, XIIIb-XIIIb, XIIIc-XIIIc of the core pin assembly of fig. 12.
Fig. 14 is a partial view of a mold assembly according to the present invention.

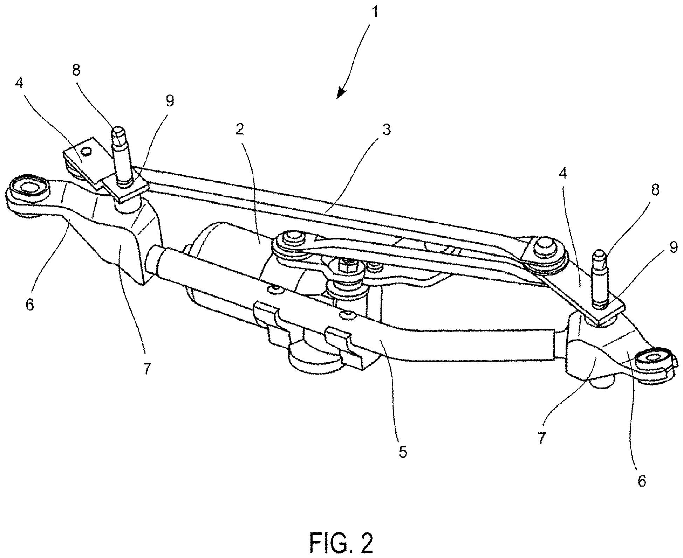

Fig. 2 shows a general view of a wiper module 1 for a vehicle wiper device. As can be seen in fig. 2, the wiper module 1 comprises, for example, two pivot shaft housings 6, each supporting pivot shaft 8 therein. Such a structure of the wiper module 1 is commonly used in vehicles like cars, trains or other fast vehicles. The wiper module 1 illustrated is built up of a wiper motor 2 connected with a link assembly 3. The wiper module 1 includes two cranks 4. The link assembly 3 is coupled with the pivot shaft 8 via the crank 4. The wiper motor 2 provides propulsion for the link assembly 3. The link assembly 3 further drives the pivot shaft 8 via the crank 4. Thus, the pivot shaft 8 rotates in the pivot shaft housing 6. The wiper module 1 further comprises a frame tube 5 for supporting the pivot shaft housing 6.

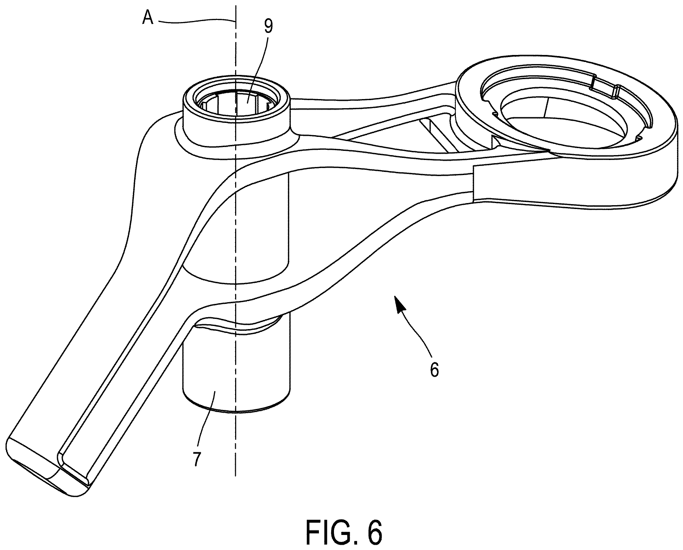

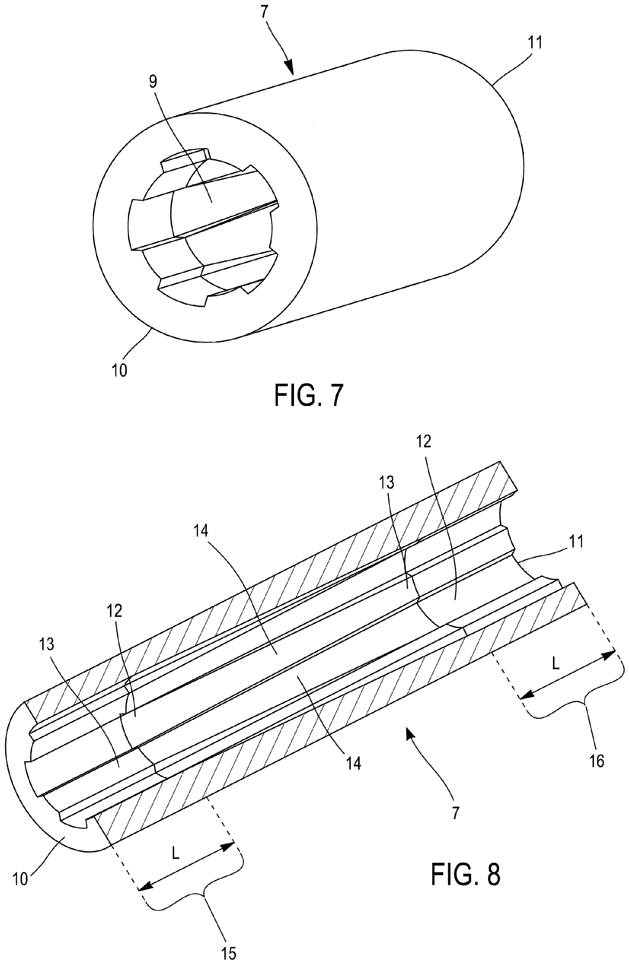

The pivot shaft housing 6 according to the present invention is presented in fig. 6. The pivot shaft housing 6 comprises a housing part 7 presented in fig. 7. The housing part 7 of the pivot shaft housing 6 comprises a through hole 9. The through hole 9 comprises two axially opposite ends 10, 11. Preferably, the housing part 7 of the pivot shaft housing 6 has substantially cylindrical external shape.

An inner surface of the through hole 9 can be seen in fig. 8. Fig. 8 is a sectional perspective view of the housing part 7 of the pivot shaft housing 6 of fig. 6. An inner surface of the through hole 9 comprises a plurality of spatial structures 14. The spatial structures 14 extend slant along at least part of the hole 9. The part of the hole 9 should be understood as a section of a distance between two opposite ends 10, 11 of the hole 9. The spatial structures 14 are arranged at an angle with respect to the longitudinal axis A of the hole 9. Further, the spatial structures 14 are arranged adjacent to each other.

The inner surface of the hole 9 is substantially formed by surfaces of the spatial structures 14. Surfaces of the slant spatial structures 14 are defined, for example, by a segment of a lateral surface of a truncated cone. The segment has a shape obtained by cutting of a lateral surface of a truncated cone between two slant heights of a truncated cone.

The surfaces of the spatial structures 14 define, in substantially each cross section taken in a perpendicular direction to the axis A of the hole 9, two diameters. The surfaces of the spatial structures 14 define first diameter D₁ at one end 10 of the hole 9 and first diameter D₁' at the other end 11 of the hole 9. Along the housing 6, first diameters D₁ and D₁' are diameters defined by ribs 13 of the housing 6. Further, the surfaces of the spatial structures 14 define second diameter D₂ at one end 10 of the hole 9 and second diameter D₂' at the other end 11 of the hole 9. Along the housing 6, second diameters D₂ and D₂' are diameters defined by grooves 12 of the housing 6.

First diameters D₁, D₁' increase from, respectively, one end 10 and the other end 11 of the hole 9 towards, respectively, the other end 11 and one end 10 of the hole 9 until a maximum of first diameter. Meanwhile, second diameters D₂, D₂' decrease from respectively, one end 10 and the other end 11 of the hole 9 towards, respectively, the other end 11 and one end 10 of the hole 9 until a minimum of second diameter.

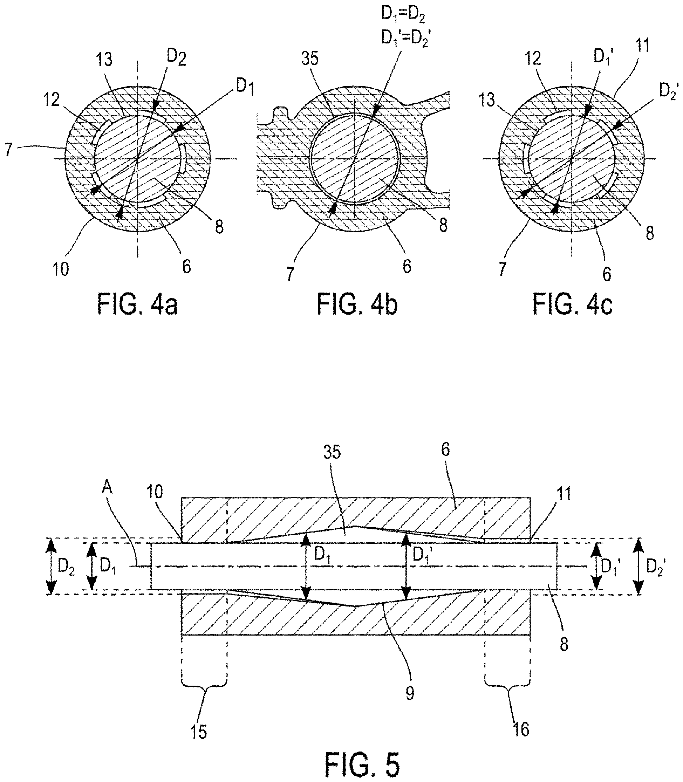

It should be noted that there is a cross section in which first and second diameters defined by grooves 12 and ribs 13 of the housing 6 are equal. When going from one end 10 towards said cross section a difference between first and second diameter D₁ and D₂ decreases. Also, when going from the other end 11 towards said cross section a difference between first and second diameter D₁' and D₂' decreases. Thus, in said cross section diameter D₁ equals D₂ and diameter D₁' equals D₂'. Moreover, in said cross section there is defined a single circle, so that D₁=D₂=D₁'=D₂'. Preferably, said cross section is a central cross section. The central cross section is positioned, preferably, in the middle between one end 10 and the other end 11 of the hole 9 as illustrated figure 5.

In a preferred embodiment, the hole 9 comprises first substantially cylindrical portion 15 at one end 10 and second substantially cylindrical portion 16 at the other end 11. First substantially cylindrical portion 15 and second substantially cylindrical portion 16 comprise a plurality of spatial structures 14 extending parallel along the hole 9. Thus, a plurality of spatial structures 14 are arranged in parallel with respect to the axis A of the hole 9. It should be noted that first diameters D₁, D₁' and second diameters D₂, D₂' are constant along the whole cylindrical portions 15, 16. Accordingly, diameters D₁ and D₂ are constant along the whole first substantially cylindrical portion 15 and diameters D₁' and D₂' are constant along the whole second substantially cylindrical portion 16.

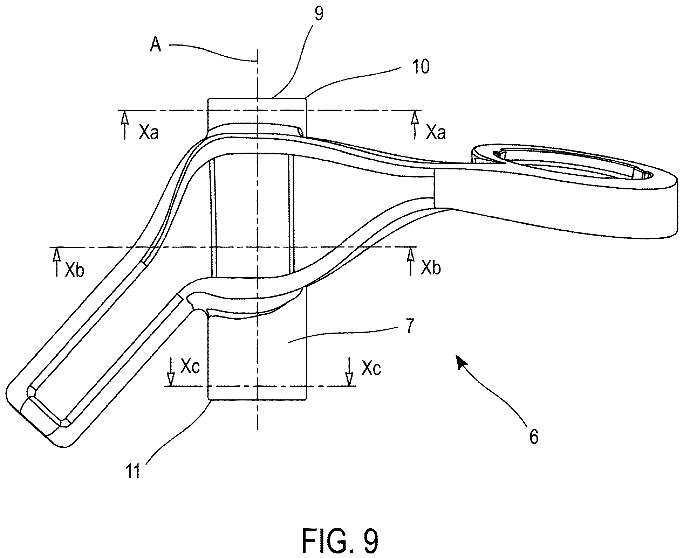

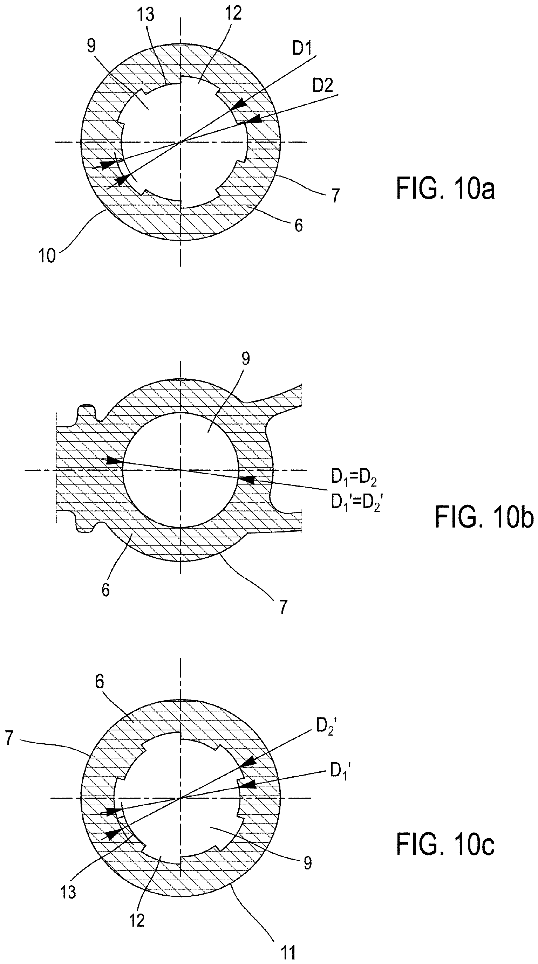

Now a reference is made to fig. 10a and 10c, which present cross section views of the pivot shaft housing 6 of fig. 9. Fig. 10a shows a cross section view at one end 10 of the hole 9 of the pivot shaft housing 6. Fig. 10c shows a cross section view at the other end 11 of the hole 9 of the pivot shaft housing 6. In a cross section taken in a perpendicular direction to the axis A of the hole 9 surfaces of the spatial structures 14 define substantially two circles. The first circle has first diameter D₁ and the second circle has second diameter D₂ at one end 10 of the hole 9. The first diameter D₁ is substantially smaller than the second diameter D₂. The above described relationship is the same for diameters D₁' and D₂' at the other end 11 of the hole 9.

Fig. 10b shows a central cross section in the central part of the hole 9 of the pivot shaft housing 6. In the central cross section there is defined a single circle. The central cross section of the hole 9 is preferably positioned in the middle between one end 10 and the other end 11 of the hole 9.

Referring again to fig. 8, each spatial structure 14 defines a groove 12 of the housing 6 at one end 10 and a rib 13 of the housing 6 at the other end 11. The spatial structures 14 are arranged in such a manner that at both ends 10, 11 of the hole 9 each two neighboring spatial structures 14 define the rib 13 of the housing 6 and the groove 12 of the housing 6, respectively.

The spatial structures 14 forming grooves 12 and ribs 13 can be seen in fig. 8. Therefore, as an example, one slant spatial structure 14 defines a groove 12 from one end 10 to the central cross section. Further, the one slant spatial structure 14 defines a rib 13 from the central cross section to the other end 11, and conversely. A neighboring and adjacent slant spatial structure 14 defines a rib 13 from one end 10 to the central cross section. Further, the neighboring slant spatial structure 14 defines a groove 12 from the central cross section to the other end 11.

It should be also understood that first substantially cylindrical portion 15 and second substantially cylindrical portion 16 are provided with grooves 12 and ribs 13 being an extension of grooves 12 and ribs 13 formed by the slant spatial structures 14 between first substantially cylindrical portion 15 and second substantially cylindrical portion 16.

Surfaces of the parallel spatial structures 14 are defined by a segment of a lateral surface of a cylinder. The segment has a shape obtained by cutting of a lateral surface of a cylinder between two generating lines of a cylinder.

Fig. 5 presents a schematic cross-section view of the pivot shaft housing 6 supporting the pivot shaft 8 therein taken in a direction of the axis A of the hole 9. It should be understood that internal surface of the hole 9 presented in this cross section view is denoted by a diameters D₁ and D₁', shown in fig. 10a and 10c.

As can be seen from fig. 5, a shape of the through hole 9 is substantially formed by two truncated cones. The two truncated cones are connected with bases having larger diameter. Therefore, preferably in the middle of the longitudinal axis A of the hole 9 there is provided a diameter D₁=D₁' with maximum value. At both ends 10, 11 of the hole 9 there are provided two substantially cylindrical portions 15, 16. As can be seen, the substantially cylindrical portions 15, 16 of the hole 9 act as bearings for the pivot shaft 8. Thus, there is no need to provide any bearing or bush in the pivot shaft housing 6 in order to support a pivot shaft 8 and minimize coaxial shaft play between the hole 9 and the pivot shaft 8.

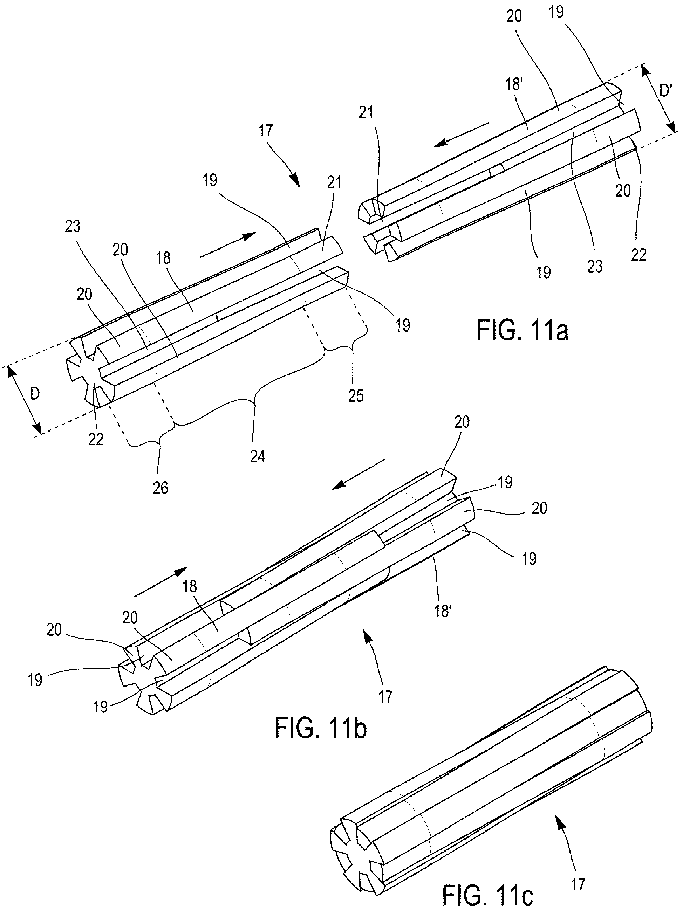

The core pin assembly 17 according to the present invention is presented in fig. 11a - 11c. Fig. 11a-c are perspective views of embodiments of the core pin assembly 17, accordingly: disassembled (fig. 11a), in a semi-assembled state (fig. 11b) and assembled (fig. 11c).

The core pin assembly 17 comprises one sliding element 18 and the other sliding element 18'. In the preferred embodiment illustrated, the first sliding element 18 and the second sliding element 18' are identical, therefore single sliding element 18 will be further described. In other embodiments, not illustrated, the sliding elements 18, 18' may have different dimensions, such as different total lengths, different diameters, etc.

The sliding element 18 has in particular substantially tapered shape.

The sliding element 18 further comprises a core 23. The sliding element 18 is provided with a plurality of longitudinal projections 20 forming a plurality of longitudinal recesses 19 between the plurality of longitudinal projections 20. A plurality of projections 20 project from the core 23. The sliding element 18 has first end 21 and top end 22. First end 21 and top end 22 are axially opposite to each other.

In a preferred embodiment, the sliding element 18 further comprises first substantially cylindrical section 25 and second substantially cylindrical section 26 in connection with a tapered section 24. First substantially cylindrical section 25 and second substantially cylindrical section 26 are provided at first end 21 and top end 22, respectively. Thus, the tapered section 24 is positioned between first substantially cylindrical section 25 and second substantially cylindrical section 26.

An external surface of the sliding element 18 is formed by a plurality of outermost surfaces of the longitudinal projections 20. Each surface of the longitudinal projection 20 in a tapered section 24 of the sliding element 18 is defined by a segment of a lateral surface of a truncated cone. The segment of a lateral surface of a truncated cone has a shape obtained by cutting of a lateral surface of a truncated cone between two slant heights of a truncated cone.

Surfaces of the longitudinal projections 20 in first substantially cylindrical section 25 and second substantially cylindrical section 26 are defined by segments of a lateral surface of a cylinder. Each segment of a lateral surface of a cylinder has a shape obtained by cutting of a lateral surface of a cylinder between two generating lines of a cylinder.

It should be understood that first substantially cylindrical section 25 and second substantially cylindrical section 26 are provided with longitudinal projections 20 and longitudinal recesses 19 being an extension of longitudinal projections 20 and longitudinal recesses 19 arranged in a tapered section 24 of the sliding element 18.

It should be also noted that a shape of the longitudinal projections 20 of one sliding element 18 corresponds to a shape of the longitudinal recesses 19 of the other sliding element 18'.

Further, one sliding element 18 and the other sliding element 18' are partly-hollow. Partly-hollow denotes that there is a space in without the core 23 along a length of the sliding element 18 from one of the ends 21, 22, for example a half of the total length. Thus, an assembly of one sliding element 18 and the other sliding element 18' is feasible.

A plurality of surfaces of longitudinal projections 20 define a circle in a cross section taken in a perpendicular direction to the longitudinal axis of the sliding element 18. A plurality of surfaces of longitudinal projections 20 of one sliding element 18 defines a circle with diameter D in any cross section taken in a perpendicular direction to the longitudinal axis of one sliding element 18. A plurality of surfaces of longitudinal projections 20 of the other sliding element 18' defines a circle with diameter D' in any cross section taken in a perpendicular direction to the longitudinal axis of the other sliding element 18'.

The diameter D is different in different cross sections of one sliding element 18 taken in a perpendicular direction to the longitudinal axis of the sliding element 18. It should be noted that at first end 21 the diameter D is the smallest. In the same time, at top end 22 the diameter D is the largest. Thus, along the tapered portion 23 the diameter D increases. Further, along first substantially cylindrical section 25 and second substantially cylindrical section 26 the diameter D is constant. The above described relationship is the same for diameter D' of the other sliding element 18'.

An assembly of one sliding element 18 and the other sliding element 18' according to the present invention is illustrated in fig. 11a - 11c. The assembly is performed by engaging, more specifically by sliding, of one sliding element 18 and the other sliding element 18'. A direction of sliding movements for assembly the core pin assembly 17 is indicated by two arrows in fig. 11a and 11b. During assembly, the longitudinal projections 20 of one sliding element 18 are positioned in the longitudinal recesses 19 of the other sliding element 18'.

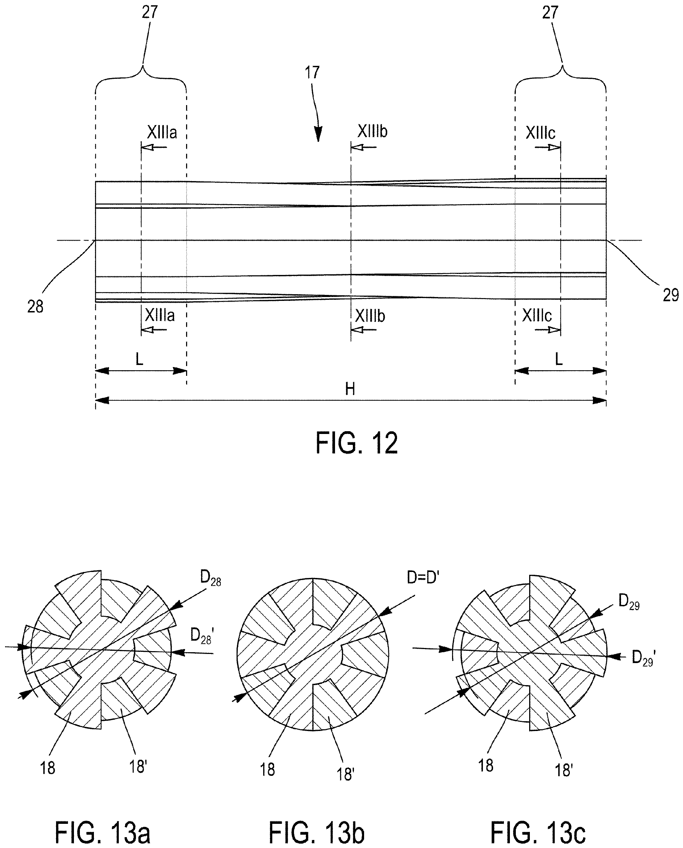

Fig. 12 presents a front view of assembled core pin assembly 17 according to the present invention. The core pin assembly 17 comprises first end 28 and second end 29. First end 28 and second end 29 of the core pin assembly 17 are axially opposite. At both ends 28, 29 there are provided substantially cylindrical sections 27 of the core pin assembly 17. Substantially cylindrical sections 27 of the core pin assembly 17 are formed by substantially cylindrical sections 25, 26 of the sliding elements 18, 18' in the assembled core pin assembly 17.

With reference to fig. 12, a length L of the substantially cylindrical sections 27 of the assembled core pin assembly 17 preferably falls within range 1/20 and 1/3 a total height H of the core pin assembly 17. More particularly, the length L falls within range 1/10 and 1/4 of a total height H of the core pin assembly 17.

It should be understood that a length of substantially cylindrical sections 27 of the core pin assembly 17 corresponds to a length of substantially cylindrical portions 15, 16 of the hole 9 as presented in fig. 8.

In a particular embodiment a length L of the substantially cylindrical section 27 at first end 28 and at second end 29 of the core pin assembly 17 are equal.

In another particular embodiment a length L of the substantially cylindrical section 27 at first end 28 and at second end 29 of the core pin assembly 17 have different values.

An external surface of the core pin assembly 17 is formed by a plurality of outermost surfaces of the longitudinal projections 20 of one sliding element 18 and the longitudinal projections 20 of the other sliding element 18'.

Now reference is made to fig. 13a and 13c. Fig. 13a shows a cross section view at first end 28 of the assembled core pin assembly 17 and fig. 13c shows a cross section view at second end 29 of the assembled core pin assembly 17. For the purpose of clarity, diameters of the sliding elements 18, 18' at first end 28 are denoted with, respectively, D₂₈, D₂₈'. Diameters of the sliding elements 18, 18' at second end 29 are denoted with, respectively, D₂₉, D₂₉'.

The above described preferred embodiment of the core pin assembly 17 ensures that in said cross sections a plurality of surfaces of the longitudinal projections 20 of one sliding element 18 define circles with diameters D₂₈, D₂₉. In the same cross sections a plurality of surfaces of the longitudinal projections 20 of the other sliding element 18' define circles with diameters D₂₈', D₂₉'. It should be understood that at first end 28 of the core pin assembly 17 the diameter D₂₈ is larger than diameter D₂₈' (fig 13a). At the second end 29 the diameter D₂₉ is smaller than diameter D₂₉' (fig. 13c).

Therefore, there is a cross section taken in a perpendicular direction to the longitudinal axis of the core pin assembly 17, in which diameter D and diameter D' are equal (fig. 13b). In a preferred embodiment said cross section is a central cross section. Fig. 13b shows a central cross section in the central part of the assembled core pin assembly 17. The central cross section of the core pin assembly 17 is preferably taken in the middle between first end 28 and second end 29 of the core pin assembly 17.

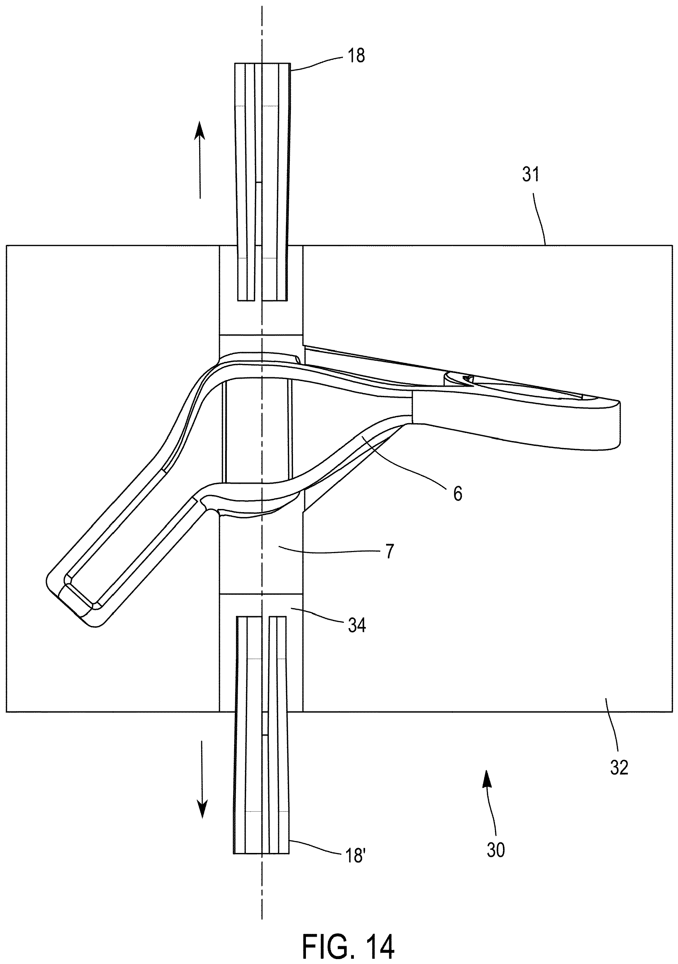

A method for producing a pivot shaft housing is performed with using of the mold assembly 30 presented in fig. 14. The mold assembly 30 comprises a mold 31 for containing a material and a core pin assembly 17. The mold 31is advantageously provided with a cavity 34 for containing the material. The mold 31, in the illustrated embodiment, further comprises first mold component 32 and second mold component 33 (only one mold component 32 is presented in fig. 14). First mold component 32 is detachably coupled with second mold component 33. When first mold component 32 is coupled with second mold component 33, the mold cavity 34 is defined between two mold components 32, 33.

Further, the core pin assembly 18,18' is assembled. The sliding elements 18,18' are assembled by sliding, namely one sliding element 18 is slided into the other sliding element 18' so as to form the core pin assembly 17. During assembly, the longitudinal projections 20 of one sliding element 18 are positioned in the longitudinal recesses 19 of the other sliding element 18' as presented in fig. 11a - 11c.

In one embodiment the core pin assembly 17 is positioned into the mold cavity 34, when the two mold components 32, 33 are separated from each other. When the core pin assembly 17 is already positioned in the mold cavity 34, first mold component 32 and second mold component 33 are coupled, so as to close the mold cavity 34 with the core pin assembly 17 therein. A material is further provided into the mold cavity 34 for forming the pivot shaft housing 6.

In another embodiment, the core pin assembly is inserted into the mold cavity 34 after mold components 32, 33 being coupled. The sliding elements 18,18' are slided into each other after mold components 32, 33 being coupled. Thus, the sliding elements 18, 18' are assembled into the core pin assembly in the mold cavity 34.

Preferably, the mold assembly 30 further comprises material feeding means (not shown) for feeding a material into the mold cavity 34. The material preferably includes a plastic material. In a preferred embodiment plastic material is injected into the mold cavity 34. In another embodiment material is metal, e.g. cast iron.

During injection of material into the mold cavity 34, the pivot shaft housing 6 is formed. Forming of the pivot shaft housing 6 is further described.

The material is provided into the mold cavity 34 containing the core pin assembly 17. The inner surface of the hole 9 of the pivot shaft housing 6 is formed by the external surface of the core pin assembly 17. The external surface is formed by outermost surfaces of the longitudinal projections 20 of the sliding elements 18, 18'. A plurality of outermost surfaces of the longitudinal projections 20 of one sliding element 18 and the other sliding element 18' in the core pin assembly 17 form a plurality of surfaces of the spatial structures 14 of the hole 9 of the pivot shaft housing 6. More specifically, the tapered sections 24 of one sliding element 18 and the other sliding element 18' of the core pin assembly 17 form the slant spatial structures 14 of the hole 9. The substantially cylindrical sections 27 situated at both ends 28, 29 of the core pin assembly 17 form, respectively, first substantially cylindrical portion 15 and second substantially cylindrical portion 16 of the hole 9 of the pivot shaft housing 6.

After injection of the material, the material is curing in the mold cavity 34. When curing of the material is completed, the two mold components 32, 33 are separated from each other. In the next step, the core pin assembly 17 is removed from the hole 9 of the pivot shaft housing 6. Said removal includes sliding out of one sliding element 18 and the other sliding element 18' from one end 10 and the other end 11 of the through hole 9. A direction of sliding movements for removing the sliding elements 18, 18' from the mold cavity 34 is indicated by two arrows in fig. 14. In a variant, it is only after removal of the core pin assembly 17 as described above, that the pivot shaft housing 6 is removed from the mold cavity 34.

In a preferred embodiment the pivot shaft housing 6 is molded in one piece.

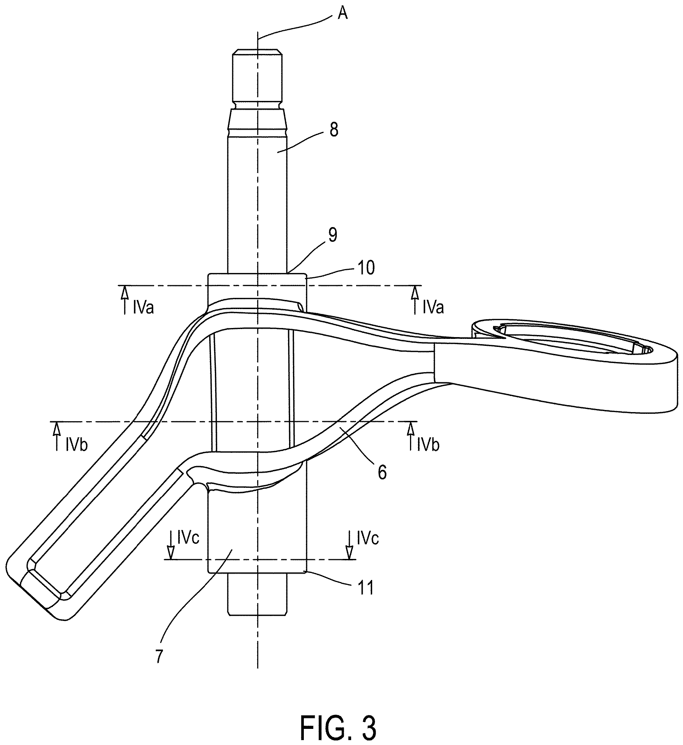

Fig. 3 presents a front view of the pivot shaft housing 6 with the pivot shaft 8 supported in the pivot shaft housing 6 according to the present invention. The pivot shaft 8 is supported in the through hole 9. The hole 9 comprises first substantially cylindrical portion 15 and second substantially cylindrical portion 16 at one end 10 and at the other end 11 of the hole 9, respectively.

Now reference is made to fig. 4a and 4c. Fig. 4a shows a cross section view at one end 10 of the hole 9 of the pivot shaft housing 6 supporting the pivot shaft 8 therein. Fig. 4c shows a cross section view at the other end 11 of the hole 9 of the pivot shaft housing 6 supporting the pivot shaft 8 therein

In fig. 4a and 4c there are shown grooves 12 and ribs 13 of the pivot shaft housing 6 supporting the pivot shaft 8. In the illustrated preferred embodiment, the hole 9 comprises ten spatial structures 14. Said ten spatial structures 14 define five grooves 12 and five ribs 13 at one end 10 of the hole 9 (fig. 4a). In the same time, ten spatial structures 14 define five grooves 12 and five ribs 13 at the other end 11 of the hole 9 (fig. 4c). It is shown that ribs 13 of the pivot shaft housing 6 act as a bearing for the pivot shaft 8 at first substantially cylindrical portion 15 and second substantially cylindrical portion 16.

Therefore, in said cross sections of the hole 9 there are defined two circles. The first circle has, respectively a first diameter D₁ at one end 10 of the hole 9 and a first diameter D₁' at the other end 11 of the hole 9. Further, the second circle has second diameter D₂ at one end 10 of the hole 9 and second diameter D₂' at the other end of the hole 9. First diameters D₁, D₁' and second diameters D₂, D₂' are constant along, respectively, whole first substantially cylindrical portion 15 and second substantially cylindrical portion 16. Therefore, a diameter of the pivot shaft 8 and first diameters D₁, D₁' are equal along whole first substantially cylindrical portion 15 and second substantially cylindrical portion 16.

Therefore, substantially cylindrical portions 15, 16 at one end 10 and the other end 11 of the hole 9 are particularly advantageous. Substantially cylindrical portions eliminate a necessity of using of additional bushes at both ends 10, 11 of the hole 9 to support the pivot shaft 8 in the pivot shaft housing 6.

In addition, substantially cylindrical portions 15, 16 at one end 10 and at the other end 11 have an advantage of minimizing of a coaxial shaft play between the pivot shaft housing 6 and the pivot shaft 8. Minimizing of a coaxial shaft play results in a high operating stability of the pivot shaft 8 supported by the pivot shaft housing 6.

Fig. 4b shows a central cross section in the central part of the hole 9 of the pivot shaft housing 6 supporting the pivot shaft 8 therein. As mentioned above, in the central cross section first diameter D₁ and second diameter D₂ are equal. In the central cross section first diameter D₁' and second diameter D₂' are equal. Thus, in the central cross section there is defined single circle with a diameter larger than a diameter of the pivot shaft 8. Thus, an annular play 35 is provided between an circumferential surface of the pivot shaft 8 and the inner surface of the hole 9.

Fig. 5 presents a schematic cross-section view of the pivot shaft housing 6 supporting the pivot shaft 8 therein taken in a direction of the longitudinal axis A of the hole 9. As can be seen in fig. 5, there is provided an annular play 35 between an circumferential surface of the pivot shaft 8 and an internal surface of the hole 9. The annular play 35 extends between first substantially cylindrical portion 15 and second substantially cylindrical portion 16 supporting the pivot shaft 8.

Thus, a friction force between the pivot shaft housing 6 and the pivot shaft 8 rotating therein is reduced. Friction force reduction provides a higher level of a pivot shaft torque inside the pivot shaft housing 6. Therefore, easy rotatability of the pivot shaft 8 in the pivot shaft housing 6 is obtained.

Advantageously the grooves 12 of the pivot shaft housing 6 contain a lubricant for even more improving rotation properties.

The described invention is not restricted to the embodiments shown but is susceptible of numerous modifications and variations, all of which are within the scope of the appended claims. All the details may further be replaced with other technically equivalent elements.

### LIST OF REFERENCE NUMBERS

(1) wiper module
(2) wiper motor
(3) link assembly
(4) crank
(5) frame tube
(6) pivot shaft housing
(7) housing part of the pivot shaft housing
(8) pivot shaft
(9) through hole
(10) one end of the through hole
(11) the other end of the through hole
(12) groove of the housing
(13) rib of the housing
(14) spatial structure
(15) first substantially cylindrical portion of the hole
(16) second substantially cylindrical portion of the hole
(17) core pin assembly
(18) one sliding element
(18') the other sliding element
(19) longitudinal recess of the sliding element
(20) longitudinal projection of the sliding element
(21) first end of the sliding element
(22) top end of the sliding element
(23) core of the sliding element
(24) tapered section of the sliding element
(25) first substantially cylindrical section of the sliding element
(26) second substantially cylindrical section of the sliding element
(27) substantially cylindrical section of the core pin assembly
(28) first end of the core pin assembly
(29) second end of the core pin assembly
(30) mold assembly
(31) mold
(32) first mold component
(33) second mold component
(34) mold cavity
(35) annular play

## Claims

1. A core pin assembly (17) comprising two sliding elements (18, 18') configured for use as a component of a mold assembly (30) for a pivot shaft housing (6), **characterized in that** the core pin assembly (17) comprises two sliding elements (18, 18') provided with a plurality of longitudinal projections (20) forming a plurality of longitudinal recesses (19) there between; and a shape of the longitudinal projections (20) of one sliding element (18) corresponds to a shape of the longitudinal recesses (19) of the other sliding element (18'); wherein the two separate sliding elements (18, 18') are configured for engaging in a reversible manner, so that the longitudinal projections (20) of one sliding element (18) are positioned in the longitudinal recesses (19) of the other sliding element (18').

2. A core pin assembly (17) according to the claim 1, **characterized in that** the sliding elements (18, 18') have substantially the same shape.

3. A core pin assembly (17) according to the claim 2, **characterized in that** the sliding elements (18, 18') are identical.

4. A sliding element (18, 18') for use in a core pin assembly (17) according to any of the previous claims, **characterized in that** the sliding element (18, 18') is provided with a plurality of longitudinal projections (20) forming a plurality of longitudinal recesses (19) there between.

5. A sliding element (18, 18') according to the previous claim, **characterized in that** it comprises at least two recesses (19) and at least two projections (20), in particular it comprises five recesses (19) and five projections (20).

6. A sliding element (18, 18') according to one of the two previous claims, **characterized in that** it comprises at least one section (25, 26) having constant external diameter, arranged at least at an end (21, 22) of the sliding element (18, 18')

7. A mold assembly (30) for forming a pivot shaft housing (6) for a vehicle wiper device **characterized in that** the assembly comprises a mold (31) provided with a cavity (34) for containing a material and a core pin assembly (17) according to any of the claims 1-3 configured to be inserted in the cavity (34).

8. A method for manufacturing a pivot shaft housing (6), **characterized in that** the method comprises the steps of:
providing of a mold assembly (30) comprising a mold (31) for containing a material and a core pin assembly (17) according to any of the claims 1 - 3;
delivering of the material into the mold (31) for forming the pivot shaft housing (6);
removing the core pin assembly (17) from the pivot shaft housing (6) by drawing the sliding elements (18, 18') out from the pivot shaft housing (6).

9. The method according to claim 8, **characterized in that** the material is plastic or metal.

10. A pivot shaft housing (6) for a vehicle wiper device, comprising a through hole (9), the hole (9) comprising two axially opposite ends (10, 11), **characterized in that** an inner surface of the hole (9) comprises a plurality of spatial structures (14), said spatial structures (14) being arranged extending slant along at least part of the hole (9), so that each spatial structure (14) defines a groove (12) at one end (10) and a rib (13) at the other end (11), and the spatial structures (14) are arranged in such a manner, that at both ends of the hole (10, 11) each two neighboring spatial structures (14) define the rib (13) and the groove (12), respectively.

11. The pivot shaft housing (6) according to claim 9, **characterized in that** the inner surface of the hole (9) comprises at least four spatial structures (14), so that at both ends (10, 11) of the hole said spatial structures (14) define at least two grooves (12) and at least two ribs (13), in particular the inner surface of the hole (9) comprises ten spatial structures (14), so that at both ends (10, 11) of the hole (9) said spatial structures (14) define five grooves (12) and five ribs (13).

12. The pivot shaft housing (6) according to any of the claims 10 and 11, **characterized in that** the grooves (12) of the pivot shaft housing (1) are configured to contain a lubricant for improving lubrication properties.

13. The pivot shaft housing (6) according to any of the claims 10 - 12, **characterized in that** the pivot shaft housing (6) is formed of plastic or the pivot shaft housing (6) is formed of metal.

14. The pivot shaft housing (6) according to any of the claims 10 - 13 **characterized in that** the housing (6) comprises at least one portion (15, 16) of the hole arranged at at least one end (10, 11) of the hole (9) comprising spatial structures extending parallel along the hole (9).

15. The pivot shaft housing (6) according to the previous claim, **characterized in that** the housing (6) comprises at least one portion (15, 16) of the hole arranged at each end (10, 11) of the hole (9) comprising spatial structures extending parallel along the hole (9).
